# EUROPÄISCHE PATENTSCHRIFT

(11) **EP 2 424 799 B1**
(45) Veröffentlichungstag und Bekanntmachung des Hinweises auf die Patenterteilung: **26.02.2014**
(21) Anmeldenummer: 10711153.6
(22) Anmeldetag: 25.03.2010
(51) Int. Cl.: B65G 47/84

(54) **VORRICHTUNG ZUR ÜBERGABE VON IM NECKBEREICH MITTELS GREIFERN OD. DGL. GEHALTENEN FLASCHEN**
DEVICE FOR TRANSFERRING BOTTLES HELD IN THE NECK AREA BY MEANS OF GRIPPERS OR THE LIKE
DISPOSITIF POUR LE TRANSFERT DE BOUTEILLES MAINTENUES DANS LA ZONE DU COL AU MOYEN DE PINCES OU SIMILAIRES

(30) Priorität: 27.04.2009 DE 102009018733
(43) Veröffentlichungstag der Anmeldung: 07.03.2012
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2010/001873
(87) Internationale Veröffentlichungsnummer: WO 2010/124768

(56) Entgegenhaltungen:
- EP-A1- 1 520 813
- WO-A1-02/34652
- GB-A- 665 506
- US-A- 5 341 620
- US-B1- 6 591 967

## Beschreibung

Die Erfindung richtet sich auf eine Vorrichtung mit den Merkmalen der Oberbegriffe der Ansprüche 1 und 2 zur Übergabe von Im Neckbereich mittels Greifern, Clipsen, Klammern od. dgl. gehaltenen Flaschen, Behältern od. dgl. von einem Transportstern zu einem anderen insbesondere in Flaschenreinlgungs- und -abfüllanlagen von beispielsweise Kunststoffflaschen wie aus EP 1 520 813 A1 bekannt ist.

Die EP 1 520 813 A1 offenbart eine Überleitvorrichtung für Behälterbehandlungsmaschinen, wie Füller. Rinser oder Verschließer für die Behandlung von Behältern mit einem Halsring, bzw. mit einem Neckring, mit einem umlaufenden Kreisel, an welchem Behandlungsplätze für die Behälter angeordnet sind, mit mindestens einem Einlaufstern. Die Überleltvorrichtung besteht aus einem starren Überleitarm.

Im Zuge des Transportes durch entsprechende Anlagen werden die Flaschen jeweils von Greifern, Clipsen, Klammern und vergleichbaren Elemente im Hals- oder Neckbereich gehalten, wobei die Klammern an sogenannten Transportsternen positioniert sind. Diese Klammern weisen häufig ein eigenes auf- und zufederndes Verhalten auf, etwa durch eigene Flexibilität oder federbelastet oder sie können auch aktiv geöffnet und geschlossen werden. Werden Flaschen z.B. von einem Transportstern zu einem anderen Transportstern übergeben, ist es bekannt, die Transportsterne mit ihren Klammerlaufbahnen teilweise überdeckend zu gestalten, wobei die Flaschen zwangsweise von einer Klammer in die andere verschoben werden. Diese Konstruktion ist in der Regel vergleichsweise aufwändig und damit auch nicht besonders gut zu reinigen.

Ein weiteres Problem besteht darin, dass es eine Tendenz gibt, vermehrt beispielsweise PET-Flaschen ohne Sicherungsnut zu handhaben, um Gewicht zu sparen, so dass die Aufgabe einer Sicherungsnut vom Neckring übernommen werden muss.

Hier setzt die Erfindung an, deren Ziel darin besteht, derartige Flaschen nur noch auf einer Ebene, und zwar in der Regel unter dem Neckring, zu halten.

Diese Aufgabe wird gemäß der Erfindung durch eine Vorrichtung mit den Merkmalen des Anspruchs 1 aber auch durch eine Vorrichtung mit den Merkmalen des Anspruchs 2 gelöst, wobei die Greifer im Übergabebereich auf einer Ebene positioniert sind, im Übergangsbereich mit ihrer Abgabeöffnung und Übernahmeöffnung voreinander positioniert sind und mindestens ein Umlenkelement vorgesehen istzum Überschieben oder Überführen der Flasche von einem Greifer eines Transportsterns bzw. Drehkreises zu einem Greifer des anderen Transportsterns bzw. Drehkreises.

Mit der Erfindung wird erkennbar erreicht, dass die Flaschen von beiden Klammern in einer Ebene gehalten werden, wobei in dieser Ebene dann ein Überschieben der einen Flasche aus dem einen Greifer oder Clips in den anderen Greifer oder Clips möglich ist. In dem hier gezeigten System bedeutet die Übergabe von einem Drehkreis auf den anderen, dass die Bewegungsbahnen der Flaschenachsen nicht tangential verlaufen, wie dies bei ineinander kämmenden Klammern oder Greifern der Fall ist. Hierdurch wird die Übergabe von einem auf den nachfolgenden Drehkreis verbessert, da die gegenlaufigen Fliehkräfte entkoppelt werden. Das radiale Überschieben stellt einen Zwischenschritt dar, bei welchem die Flasche oberhalb des Flaschenschwerpunktes einen Impuls erfährt, der der Auslenkung durch die Fliehkraft des ersten Drehkreises entgegenwirkt bzw. diese mildert.

Ausgestaltungen insbesondere der Stirnseite derartiger Greifer, die in der Regel stumpf gegeneinander liegen, ergeben sich aus den weiteren Unteransprüchen, Dabei ist erfindungsgemäß vorgesehen, dass die Greifer mit Greiferarmen ausgerüstet sind, die eine gerade, stirnseitige Randkante aufweisen, die mit der jeweils anderen Randkante des gegenüberliegenden Greiferarmes im Übergabepunkt stumpf aneinanderliegt.

In weiterer Ausgestaltung ist erfindungsgemäß vorgesehen, dass die Stirnseiten der Greiferarme eines Transportsternes einen zur Horizontalebene schrägen Endverlauf aufweisen, wobei die korrespondierenden, gegenüberliegenden Stirnseiten der Greiferarme des anderen Transportsternes eine umgekehrt ausgerichtete Kontur derart aufweist, dass in der einander gegenüberstehenden Position die Stirnseiten ineinander schneiden.

Zweckmäßig kann erfindungsgemäß auch vorgesehen sein, dass die Stirnseiten der Greiferarme eines Transportsternes eine V-förmige Nut und die gegenüberliegenden Stirnseiten der Greiferarme des anderen Transportsternes mit einer in die Nut eingreifenden keilförmigen Gestaltung versehen sind und/oder dass die Stirnseiten der Greiferarme eines Transportsternes eine halbkreisförmige Nut und die gegenüberliegenden Stirnseiten der Greiferarme des anderen Transportsternes mit einer Wulst versehen sind.

Weitere Merkmale, Einzelheiten und Vorteile der Erfindung ergeben sich aufgrund der nachfolgenden Beschreibung sowie anhand der Zeichnung. Diese zeigt in
Fig. 1 eine prinzipielle Darstellung eines Aufrisses von zwei Transportsternen mit Flaschenclipsen und angedeuteten Flaschen,
Fig.2 eine räumliche Gestaltung eines derartigen Clipspaares in der Übergabeposition,
Fig. 3 eine Seitenansicht gemäß III in Fig. 2,
Fig. 4 und 5 in gleicher Gestaltung wie Fig. 2 und 3 eine Clipsvariante sowie in

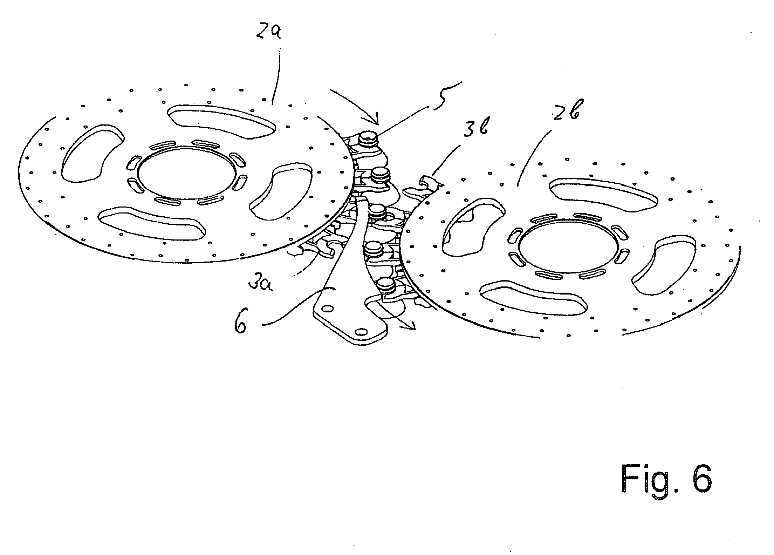

Fig. 6 eine Aufsicht auf die Übergabeposition von Transportstern zu Transportstern, etwa in der Darstellung gemäß Fig. 1.

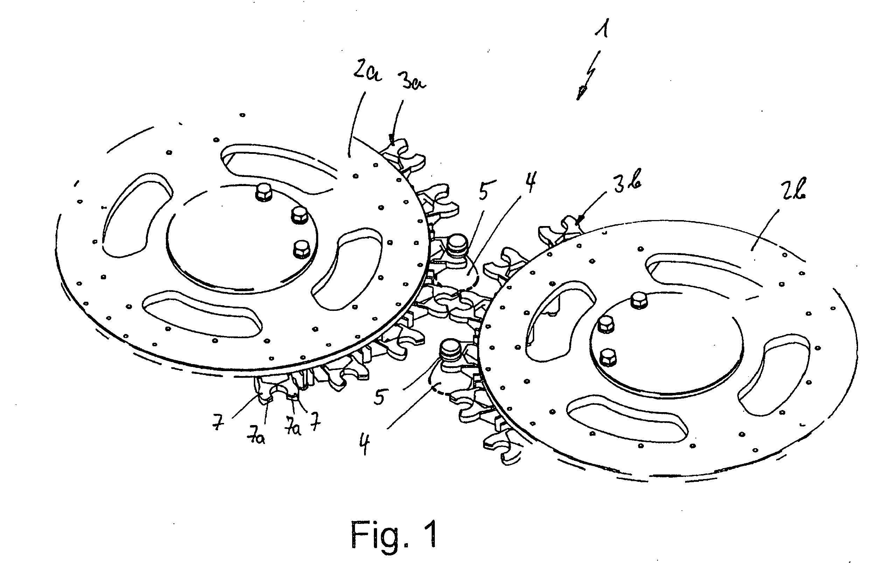

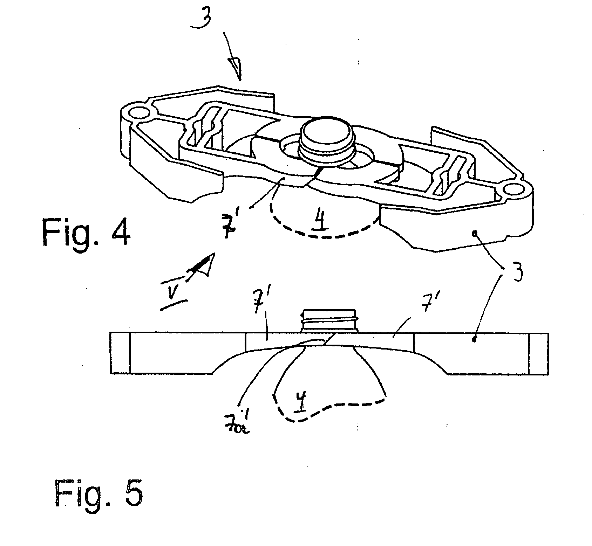

Die allgemein mit 1 bezeichnete Vorrichtung weist u.a. einen ersten Transportstern 2a mit einer Mehrzahl von am Umfang verteilten Klammern oder Greifern 3a und einen diesem Transportstern 2a zugeordneten zweiten Transportstern 2b mit ebenfalls am Umfang verteilten Greifern 3b auf, wobei von den Greifern 3a bzw. 3b Flaschen 4 an ihrem Neckbereich 5 erfasstwerden. Dabei ist es Ziel, die Flaschen 5 aus den Greifern 3a in der in etwa in Fig. 1 dargestellten Lage in die Greifer 3b des Transportsternes 2b zu überführen, was beispielsweise über eine Zwangsführung mittels eines Überführungskurve oder eines ähnlichen Bauelementes, in Fig. 4 allgemein mit 6 bezeichnet, bewirkt werden kann.

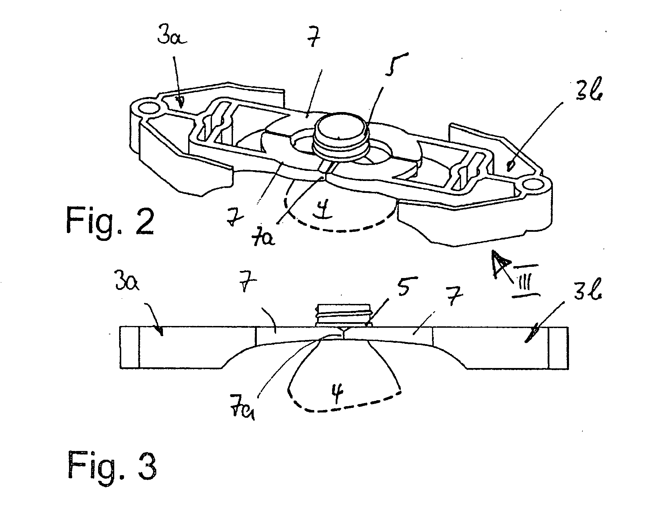

Erkennbar liegen die Greifer 3 auf exakt der gleichen Ebene, derart, dass sie mit ihren Greiferarmen 7 bzw. deren Stirnseiten 7a stumpf voreinander liegen, so dass in der in Fig. 1 dargestellten Position die Flasche 4 aus den Greiferarmen 7 in die Greiferarme des gegenüberliegenden Greifers verschiebbar ist. Diese Position ist in Fig. 2 vergrößert wiedergegeben.

In den Fig. 4 und 5 ist ein gegenüber den Fig. 2 und 3 abgewandeltes Ausführungsbeispiel der Klammer bzw. des Greifers 3 dargestellt. Hier weisen die Greiferarme 7' eine einseitige angefaste Stirnseite 7a' auf, die so gestaltet ist, dass die beiden Greiferarme unterschiedlicher Greifer ineinanderschneiden, wie sich dies insbesondere aus Fig. 5 ergibt.

Erfindungsgemäß hat sich herausgestellt, wenn mindestens die Greffer 3a eines Drehkreises, 2a derart gelagert sind, dass diese In Umfangsrichtung des Drehkreises und in der von den Greifern aufgespannten Ebene schwenkbar sind. Somit können diese der Bewegung der Flaschen oder Behälter bei der Übergabe etwas folgen, was einen störungsfreien Betrieb ermöglicht. Erfindungsgemäß ist es natürlich, wenn die Greifer 3a, 3b zweier angrenzender Drehkreise 2a, 2b derart gelagert sind, dass diese in Umfangsrichtung des Drehkreises schwenkbar sind. Der hierbei nötige Winkelbereich beträgt maximal bis zu +/- 30° zur Lotrechten des Drehkreises 2a, 2b. Im Regelfall schwenken derartig gelagerte Greifer in einem Winkelbereich von 5° bis 15°.

Erfindungsgemäß ist es, wenn die Greifern oder Clips mit elastischen Greifarmen ausgerüstet sind, so dass ebenfalls der Flaschenbewegung gefolgt bzw. entgegengeeilt werden kann. Ebenfalls von Vorteil ist die Kombination von Schwenkbarkeit und Elastizität, wobei ein schwenkbargelagerter Greifer oder Clips, zusätzlich elastische Greifarme und/oder einen elastischen Grundkörper aufweist.

Natürlich sind die beschriebenen Ausführungsbeispiele der Erfindung noch in vielfacher Hinsicht abzuändern. So kann eine Greiferstirnseite als V-förmige Nut gestaltet sein, während die Eingriffsseite des gegenüberliegenden Transportsternes keilförmig ausgebildet ist u. dgl. mehr. Die vorstehenden Begriffe Transportstern und Drehkreis sind synonym verwendet, wobei herunter auch ein Füller-, Rinserstern oder dergleichen verstanden werden kann, ohne die Lehre der Erfindung zu verlassen.

## Patentansprüche

1. Vorrichtung (1) zur Übergabe von im Neckbereich mittels Greifern, Clipsen, Klammern od. dgl. gehaltenen Flaschen (4), Behältern od. dgl. von einem Transportstern (2a) zu einem anderen Transportstern (2b) oder auch zu einem Rinser, Füller od. dgl., wobei die Greifer (3) im Übergabebereich auf einer Ebene positioniert sind, im Übergangsbereich mit ihrer Abgabeöffnung und Übernahmeöffnung voreinander positioniert sind und mindestens ein Umlenkelement (6) vorgesehen ist zum Überschieben oder Überführen der Flasche (4) von einem Greifer (3a) eines Drehkreises zu einem Greifer (3b) des anderen Drehkreises,
**dadurch gekennzeichnet, dass**
die Greifer (3) mit elastischen Greiferarmen (7) ausgerüstet sind, wobei die Greifer (3a, 3b) zweier angrenzender Drehkreise (2a, 2b) derart gelagert sind, dass diese in der Umfangsrichtung des Drehkreises in der von den Greifern (3a,3b) aufgespannten Ebene schwenkbar sind, und wobei die Greifarme (7) eine gerade Stirnseite (7a) aufweisen, die mit der jeweils anderen Stirnseiten (7a) des gegenüberliegenden Greiferarmes im Übergabepunkt stumpf aneinander liegt.

2. Vorrichtung (1) zur Übergabe von im Neckbereich mittels Greifern, Clipsen, Klammern od. dgl. gehaltenen Flaschen (4), Behältern od. dgl. von einem Transportstern (2a) zu einem anderen Transportstern (2b) oder auch zu einem Rinser. Füller od, dgl., wobei die Greifer (3) im Übergabebereich auf einer Ebene positioniert sind, Im Übergangsbereich mit ihrer Abgabeöffnung und Übernahmeöffnung voreinander positioniert sind und mindestens ein Umlenkelement (6) vorgesehen ist zum Überschieben oder Überführen der Flasche (4) von einem Greifer (3a) eines Drehkreises zu einem Greifer (3b) des anderen Drehkreises,
**dadurch gekennzeichnet, dass**
die Greifer (3) mit elastischen Greiferarmen (7) ausgerüstet sind, wobei die Greifer (3a, 3b) zweier angrenzender Drehkreise (2a, 2b) derart gelagert sind, dass diese in der Umfangsrichtung des Drehkreises in der von den Greifern (3a,3b) aufgespannten Ebene schwenkbar sind, und wobei Stirnseiten (7a) der elastischen Greifarmen (7) eines Transportsternes (2a) einen zur Horizontalebene schrägen Endverlauf aufweisen, wobei die korrespondierenden, gegenüberliegenden Stirnseiten (7a) der Greiferarme (7) des anderen Transportsternes (2b) eine umgekehrt ausgerichtete Kontur derart aufweisen, dass in der einander gegenüberstehenden Position die Stirnseiten (7a) ineinander schneiden.

3. Vorrichtung nach Anspruch 1 oder 2, **dadurch gekennzeichnet, dass** die Stirnseiten (7a) der Greiferarme (3) eines Transportsternes eine V-förmige Nut und die gegenüberliegenden Stirnseiten der Greiferarme des anderen Transportsternes mit einer in die Nut eingreifenden keilförmigen Gestaltung versehen sind.

4. Vorrichtung nach einem der vorhergehenden Ansprüche, **dadurch gekennzeichnet, dass** die Stirnseiten (7a) der Greiferarme (3) eines Transportsternes eine halbkreisförmige Nut und die gegenüberliegenden Stirnseiten der Greiferarme des anderen Transportsternes mit einer Wulst versehen sind.

5. Vorrichtung nach Anspruch 1, **dadurch gekennzeichnet, dass** der mindestens eine Greifer (3a, 3b) in einem Winkelbereich von bis zu +/- 30° zur Lotrechten des Drehkreises (2a, 2b) schwenkbar ist.

## Claims

1. Device (1) for transferring bottles (4), containers, or the like held in the neck area by means of grippers, clips, clamps, or the like from one transport star wheel (2a) to another (2b), or to a rinser, filler, or the like, wherein the grippers (3) are positioned on a plane in the transfer area, having a delivery opening and transfer opening positioned one in front of the other in the transfer area, and having at least one diverting element (6) for sliding or transferring the bottle (4) from a gripper (3a) of a turning circle to a gripper (3b) of the other turning circle,
**characterised in that**
the grippers (3) are equipped with elastic gripper arms (7), wherein the grippers (3a, 3b) of two adjacent turning circles (2a, 2b) are supported such that these are pivotable in the circumferential direction of the turning circle in the plane defined by the grippers (3a, 3b), and wherein the gripper arms (7) have a straight face (7a) which butts together with the respective other face (7a) of the opposite gripper arm in the transfer point.

2. Device (1) for transferring bottles (4), containers, or the like held in the neck area by means of grippers, clips, clamps, or the like from one transport star wheel (2a) to another (2b), or to a rinser, filler, or the like, wherein the grippers (3) are positioned on a plane in the transfer area, having a delivery opening and transfer opening positioned one in front of the other in the transfer area, and having at least one diverting element (6) ) for sliding or transferring the bottle (4) from a gripper (3a) of a turning circle to a gripper (3b) of the other turning circle,
**characterised in that**
the grippers (3) are equipped with elastic gripper arms (7), wherein the grippers (3a, 3b) of two adjacent turning circles (2a, 2b) are supported such that these are pivotable in the circumferential direction of the turning circle in the plane defined by the grippers (3a, 3b), and wherein faces (7a) of the elastic gripper arms (7) of a transport star wheel (2a) have an end run that is inclined to the horizontal plane, wherein the corresponding, opposing faces (7a) of the gripper arms (7) of the other transport star wheel (2b) have an inversely aligned contour such that the faces (7a) intersect in their opposing positions.

3. Device according to claim 1 or 2, **characterised in that** the faces (7a) of the gripper arms (3) of a transport star wheel have a V-shaped groove and the opposing faces of the gripper arms of the other transport star wheel are provided with a wedge-shaped design that engages the groove.

4. Device according to any one of the preceding claims, **characterised in that** the faces (7a) of the gripper arms (3) of a transport star wheel have a semicircular groove and the opposing faces of the gripper arms of the other transport star wheel are provided with a bead.

5. Device according to claim 1, **characterised in that** the at least one gripper (3a, 3b) is pivotable in an angular range of up to +/- 30° to the vertical of the turning circle (2a, 2b).

## Revendications

1. Dispositif (1) pour le transfert de bouteilles (4), récipients ou similaires, maintenues dans la zone du col au moyen de pinces, clips, attaches ou similaires, d'une étoile de transfert (2a) à une autre étoile de transfert (2b) ou également à une rinceuse, une remplisseuse ou similaire, les pinces (3) étant positionnées dans la zone de transfert sur un plan, celles-ci étant positionnées dans la zone de passage avec leur ouverture de sortie et ouverture de reprise les unes devant les autres et au moins un élément de déviation (6) étant prévu pour pousser ou transporter la bouteille (4) d'une pince (3a) d'un cercle rotatif à une pince (3b) de l'autre cercle rotatif,
**caractérisé en ce que** les pinces (3) sont équipées de bras de pince élastiques (7), les pinces (3a, 3b) de deux cercles rotatifs contigus (2a, 2b) étant logées de manière que ceux-ci puissent pivoter dans le sens périphérique du cercle rotatif dans le plan défini par les pinces (3a, 3b), et les bras de pince (7) présentant un côté avant (7a) droit qui repose l'un contre l'autre bout à bout avec les autres cotés avant (7a) respectifs du bras de pince opposé dans le point de transfert.

2. Dispositif (1) pour le transfert de bouteilles (4), récipients ou similaires, maintenues dans la zone du col au moyen de pinces, clips, attaches ou similaires d'une étoile de transfert (2a) à une autre étoile de transfert (2b) ou également à une rinceuse, une remplisseuse ou similaire, les pinces (3) étant positionnées dans la zone de transfert sur un plan, celles-ci étant positionnées dans la zone de passage avec leur ouverture de sortie et ouverture de reprise les unes devant les autres et au moins un élément de déviation (6) étant prévu pour pousser ou transporter la bouteille (4) d'une pince (3a) d'un cercle rotatif à une pince (3b) de l'autre cercle rotatif,
**caractérisé en ce que** les pinces (3) sont équipées de bras de pince élastiques (7), les pinces (3a, 3b) de deux cercles rotatifs contigus (2a, 2b) étant logées de telle manière que ceux-ci puissent pivoter dans le sens périphérique du cercle rotatif dans le plan défini par les pinces (3a, 3b), et des côtés avant (7a) des bras de pince (7) élastiques d'une étoile de transport (2a) présentant un développement terminal en biais par rapport au plan horizontal, les côtés avant (7a) opposés, correspondants des bras de pince (7) de l'autre étoile de transport (2b) présentant un contour orienté dans le sens inverse de telle manière que dans la position opposée, les côtés avant (7a) se recoupent en eux.

3. Dispositif selon la revendication 1 ou 2, **caractérisé en ce que** les côtés avant (7a) des bras de pince (3) d'une étoile de transport sont pourvus d'une rainure en V et les côtés avant opposés des bras de pince de l'autre étoile de transport sont pourvus d'une structure cunéiforme s'engageant dans la rainure.

4. Dispositif selon l'une quelconque des revendications précédentes, **caractérisé en ce que** les côtés avant (7a) des bras de pince (3) d'une étoile de transport sont pourvus d'une rainure semi-circulaire et les côtés avant opposés des bras de pince de l'autre étoile de transport sont pourvus d'un bourrelet.

5. Dispositif selon la revendication 1, **caractérisé en ce que** l'au moins une pince (3a, 3b) peut être pivotée dans une plage angulaire s'élevant jusqu'à +/- 30° par rapport à la perpendiculaire du cercle rotatif (2a, 2b).
